# EUROPEAN PATENT APPLICATION

(11) **EP 4 365 220 A1**
(43) Date of publication of application: **08.05.2024**
(21) Application number: 22832657.5
(22) Date of filing: 25.05.2022
(51) Int. Cl.: C08H 7/00, B41M 5/333

(54) **THERMOSENSITIVE RECORDING MATERIAL**

(30) Priority: 30.06.2021 JP 2021108546; 28.12.2021 JP 2021214415
(71) Applicant: Nicca Chemical Co., Ltd., Fukui-shi, Fukui 910-8670 (JP); Nippon Paper Industries Co., Ltd., Tokyo 114-0002 (JP)
(72) Inventor: SAITO Hajime, Fukui-shi, Fukui 910-8670 (JP); MORI Yasuo, Fukui-shi, Fukui 910-8670 (JP); YASUMOTO Mayumi, Fukui-shi, Fukui 910-8670 (JP); ICHIMURA Kenta, Fukui-shi, Fukui 910-8670 (JP); SUGIMOTO Masashige, Fukui-shi, Fukui 910-8670 (JP); KOSHI Tatsuro, Tokyo 114-0002 (JP); MIDORIKAWA Yoshimi, Tokyo 114-0002 (JP); TOSAKA Masaya, Tokyo 114-0002 (JP); HIRAI Kenji, Tokyo 114-0002 (JP)
(74) Representative: Boult Wade Tennant LLP
(86) International application number: PCT/JP2022/021349
(87) International publication number: WO 2023/276499

(57) **Abstract**

A thermosensitive recording material including a support and a thermosensitive coloring layer provided on the support,
in which the thermosensitive coloring layer contains (A) a coloring substance, (B) a kraft lignin in which a content of dimethyl disulfide is 2.5 ppm or less and (C) a specific developer.

## Description

### Technical Field

The present disclosure relates to a thermosensitive recording material.

### Background Art

Recently, from both viewpoints of the global warming issue or the waste issue, biomass has been gaining attention as a resource or an energy source that is sustainably renewable as long as there are living things and solar energy. Under such a circumstance, there is a demand for development of a technique for using biomass such as plants or plant-derived processed goods or a technique for converting petroleum-derived chemical goods, resin products or the like to biomass. For example, as a forest resource, wood waste materials such as thinned wood, construction waste and paper mill waste are not only incinerated as fuels but a majority thereof is also disposed of. However, from the viewpoint of global environment protection, studies are underway regarding the effective use or recycling of such waste materials.

The principal components of ordinary wood are cellulose, hemicellulose and lignin. Among them, lignin is contained in wood in a proportion of approximately 30% and is said to be a natural organic compound that is the second most abundant on earth next to cellulose. Lignin abundantly contains an aromatic ring and also has a reactive functional group such as a hydroxyl group, and the industrial use of lignin is thus being expected.

Amid such a situation, Patent Literature 1 discloses a thermosensitive recording body provided with a thermosensitive recording layer, in which isolated lignin is contained as an electron-accepting developer.

### Citation List

### Patent Literature

[Patent Literature 1] Japanese Unexamined Patent Publication No. 2020-104274

### Summary of Invention

### Technical Problem

This isolated lignin is normally obtained by performing chemical modification on the above-described lignin. As the isolated lignin, there are lignosulfonic acid (salt), kraft lignin, soda lignin, soda-anthraquinone lignin, organosol lignin, blasted lignin, sulfuric acid lignin and the like depending on the difference in chemical modification.

Among the isolated lignins, kraft lignin abundantly contains an aromatic ring and has a reactive functional group such as a hydroxyl group and is thus suitable for coloring a coloring substance that is used in a thermosensitive recording material. Therefore, the application to thermosensitive recording materials as an environmentally friendly developer is expected.

Kraft lignin is derived from wood and is thus environmentally friendly. However, according to the present inventors' studies, it has been clarified that, when a thermosensitive recording material for which kraft lignin is used as a developer is heated to form an image portion, an unpleasant odor that is not sensible from kraft lignin in an isolated state (hereinafter, also referred to as "unpleasant odor") is generated.

An objective of one aspect of the present invention is to provide a thermosensitive recording material from which an unpleasant odor is less likely to be sensed at the time of forming an image portion while kraft lignin is used as a developer.

### Solution to Problem

As a result of repeating intensive studies to solve the above-described problem, the present inventors specified, among a variety of components in kraft lignin, dimethyl disulfide as a cause of the unpleasant odor that is sensed at the time of forming an image portion. In addition, the present inventors found that, when kraft lignin is purified by heating the kraft lignin and water and performing the azeotropic distillation of dimethyl disulfide with water, and the content of dimethyl disulfide in the kraft lignin is made to be a specific concentration or lower, it is possible to make the unpleasant odor at the time of forming image portions less likely to be sensed from thermosensitive recording materials to be obtained and completed the present invention based on such a finding.

That is, an objective of one aspect of the present invention is to provide a thermosensitive recording material including a support and a thermosensitive coloring layer provided on the support, in which the thermosensitive coloring layer contains (A) a coloring substance, (B) a kraft lignin in which a content of dimethyl disulfide is 2.5 ppm or less and (C) at least one developer of a compound of the following (C-1) group, a compound of the following (C-2) group and a compound of the following (C-3) group.
(C-1) group: a compound represented by the following general formula (I) having a sulfonylurea group
(C-2) group: a compound represented by the following general formula (II) having a sulfonylamide group
(C-3) group: 4,4'-dihydroxy diphenyl sulfone, 2,4'-dihydroxydiphenylsulfone, bis(3-allyl-4-hydroxyphenyl)sulfone, 4-hydroxy-4'-isoproxydiphenyl sulfone, 4-hydroxy-4'-allyloxydiphenyl sulfone and 4-benzyloxy-4'-hydroxy diphenyl sulfone

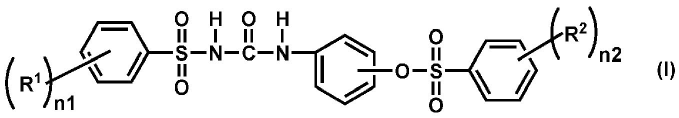

[In the formula, R¹ and R² represent a halogen atom, an alkyl group having 1 to 4 carbon atoms, an alkenyl group having 2 to 4 carbon atoms or an alkoxy group having 1 to 4 carbon atoms, n1 and n2 represent an integer of 0 to 3, and, in a case where a plurality of R¹'s and a plurality of R²'s are present, R¹'s and R²'s may be the same as or different from each other.]

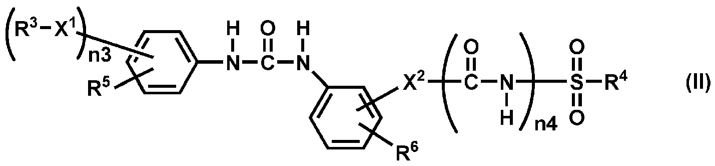

[In the formula, X¹ and X² each independently represent -O- or -NH-, R³ represents a hydrogen atom or -SO₂-R⁴, R⁴ represents a substituted or unsubstituted alkyl group, aralkyl group or aryl group, R⁵ and R⁶ each independently represent a hydrogen atom or an alkyl group, n3 represents 0 or 1, n4 represents an integer of 0 to 2, and, in a case where a plurality of R³'s is present, R³'s may be the same as or different from each other.]

In the thermosensitive recording material, in the thermosensitive coloring layer, a ratio ((B) component/(C) component) of a content of the (B) component to a content of the (C) component may be 20/80 to 90/10 in terms of mass ratio.

The thermosensitive recording material may contain a compound represented by the following structural formula (III) as the developer.

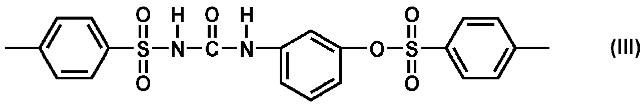

The thermosensitive recording material may contain one or more of compounds represented by the following structural formulae (IV) to (VI) as the developer.

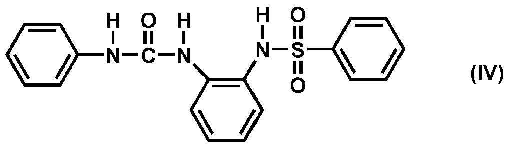

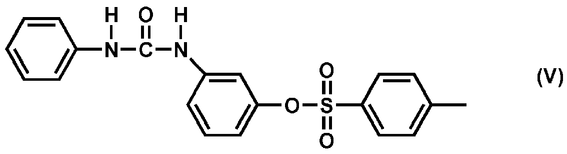

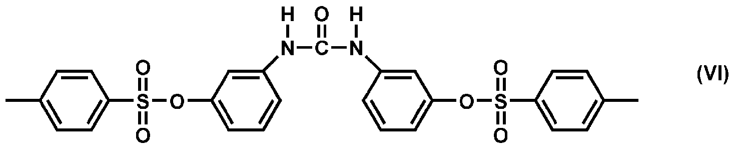

### Advantageous Effects of Invention

According to one aspect of the present invention, it is possible to provide a thermosensitive recording material from which an unpleasant odor is less likely to be sensed at the time of forming an image portion while kraft lignin is used as a developer.

In addition, the thermosensitive recording material is capable of forming image portions having excellent preservability in alcohols and water.

### Description of Embodiments

Hereinafter, an embodiment of the present invention will be described. However, the present invention is not limited to the following embodiment.

The thermosensitive recording material according to the present embodiment includes a support and a thermosensitive coloring layer provided on the support. Hereinafter, the thermosensitive recording material will be described in detail.

### [Support]

The support is not particularly limited, and, for example, paper such as neutral paper and acidic paper, recycled paper using waste paper pulp, synthetic paper, a film, a non-woven fabric, a woven fabric and the like can be used.

### [Thermosensitive coloring layer]

The thermosensitive coloring layer contains (A) a coloring substance (hereinafter, also referred to as "(A) component"), (B) a kraft lignin in which a content of dimethyl disulfide is 2.5 ppm or less (hereinafter, also referred to as "(B) component") and (C) at least one developer of a compound of the following (C-1) group, a compound of the following (C-2) group and a compound of the following (C-3) group (hereinafter, also referred to as "(C) component").
(C-1) group: a compound represented by the following general formula (I) having a sulfonylurea group
(C-2) group: a compound represented by the following general formula (II) having a sulfonylamide group
(C-3) group: 4,4'-dihydroxy diphenyl sulfone, 2,4'-dihydroxydiphenylsulfone, bis(3-allyl-4-hydroxyphenyl)sulfone, 4-hydroxy-4'-isoproxydiphenyl sulfone, 4-hydroxy-4'-allyloxydiphenyl sulfone and 4-benzyloxy-4'-hydroxy diphenyl sulfone

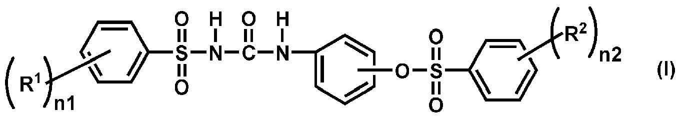

[In the formula, R¹ and R² represent a halogen atom, an alkyl group having 1 to 4 carbon atoms, an alkenyl group having 2 to 4 carbon atoms or an alkoxy group having 1 to 4 carbon atoms, n1 and n2 represent an integer of 0 to 3, and, in a case where a plurality of R¹'s and a plurality of R²'s are present, R¹'s and R²'s may be the same as or different from each other.]

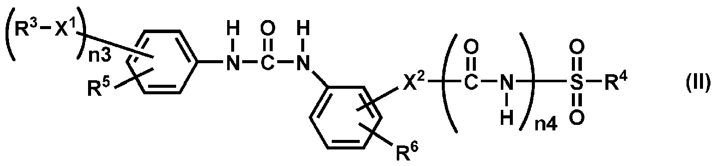

[In the formula, X¹ and X² each independently represent -O- or -NH-, R³ represents a hydrogen atom or -SO₂-R⁴, R⁴ represents a substituted or unsubstituted alkyl group, aralkyl group or aryl group, R⁵ and R⁶ each independently represent a hydrogen atom or an alkyl group, n3 represents 0 or 1, n4 represents an integer of 0 to 2, and, in a case where a plurality of R³'s is present, R³'s may be the same as or different from each other.]

### <(A) component>

As the (A) component (coloring substance), a colorless or light-colored leuco dye can be used. Examples of the leuco dye include fluoran derivatives, quinazoline derivatives, phthalide derivatives, triphenylmethane derivatives and phenothiazine derivatives. These leuco dyes can be used singly or two or more thereof can be used in combination.

Among these leuco dyes, a leuco dye having a fluoran structure can be particularly suitably used since the coloring properties are favorable. Examples of the leuco dye having a fluoran structure include 3-isoamylethylamino-6-methyl-7-anilinofluoran, 3-(N-(4-methylphenyl)-N-ethyl)amino-6-methyl-7-anilinofluoran, 3-diamylamino-6-methyl-7-anilinofluoran, 3-dibutylamino-6-methyl-7-anilinofluoran, 3-diethylamino-6-methyl-7-anilinofluoran and 3-cyclohexylmethylamino-6-methyl-7-anilinofluorane.

The content of the coloring substance in the thermosensitive coloring layer can be set as appropriate depending on the characteristics of an intended thermosensitive recording material. The content of the coloring substance may be, for example, 1 to 30 mass%, may be 5 to 20 mass% or may be 8 to 18 mass% based on the total amount of the thermosensitive coloring layer.

### <(B) component>

The kraft lignin is isolated lignin that is obtained by treating lignin by a kraft method. The kraft method is a method by which lignin is chemically modified with sodium hydroxide (NaOH), sodium sulfide (Na₂S) and the like and separated.

In a method for measuring the content of dimethyl disulfide, the content is measured using a headspace gas chromatography mass spectrometer.

The content of dimethyl disulfide is 2.5 ppm or less from the viewpoint of suppressing an unpleasant odor during printing from the thermosensitive recording material according to the present embodiment. The content of dimethyl disulfide is preferably 2.0 ppm or less and more preferably 1.5 ppm or less since the unpleasant odor during printing can be further suppressed. On the other hand, in a case where the content of dimethyl disulfide exceeds 2.5 ppm, an unpleasant odor can be sensed when heat is applied to a thermosensitive recording material to be obtained during printing.

When the content of the dimethyl disulfide in the kraft lignin is within the above-described range, it is possible to suppress the deterioration of wet and heat resistance and lightfastness in portions other than image portions.

A method for producing the kraft lignin that is used as the (B) component is not particularly limited as long as the content of dimethyl disulfide becomes 2.5 ppm or less in the method. As such a method, for example, commercially available kraft lignin and water are heated, and the kraft lignin is purified by performing the azeotropic distillation of dimethyl disulfide with water, whereby the content of dimethyl disulfide in the kraft lignin can be made to be 2.5 ppm or less.

### <(C) component>

### (Compound of (C-1) group)

In the formula (I), R¹ and R² are preferably an alkyl group having 1 to 4 carbon atoms, more preferably an alkyl group having 1 or 2 carbon atoms and still more preferably a methyl group since there is a tendency that the coloring properties and image portion preservability of a thermosensitive recording material to be obtained further improve.

In the formula (I), n1 and n2 are preferably 0 to 2, more preferably 0 or 1 and still more preferably 1. Within the above-described range, it is possible to obtain a thermosensitive recording material that is superior in terms of coloring properties and image portion preservability.

From the viewpoint of coloring properties and image portion preservability, the compound of the (C-1) group is particularly preferably a compound represented by the following structural formula (III) (compound for which R¹ and R² are methyl groups and n1 and n2 are 1 in the formula (I)).

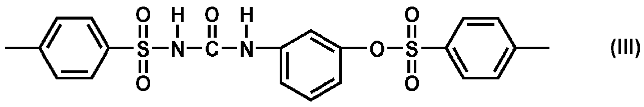

A method for producing the compound of the (C-1) group is not particularly limited. Examples of such a production method include a method described in Japanese Translation of PCT Application No. 2002-532441. As the compound of the (C-1) group, a commercially available product may be used.

Examples of such a commercially available product include PF-201 (trade name, structural formula: the structural formula (III), compound name: N-[p-toluenesulfonyl]-N'-[3-p-toluenesulfonyl oxyphenyl]urea) manufactured by BASF SE and the like.

The compound of the (C-1) group may be used singly or two or more thereof may be used in combination.

### (Compound of (C-2) group)

In the formula (II), R³ and R⁴ are preferably an alkyl group having 1 to 4 carbon atoms, more preferably an alkyl group having 1 or 2 carbon atoms and still more preferably a methyl group since the coloring properties and image portion preservability of a thermosensitive recording material to be obtained further improve.

In the formula (II), n3 and n4 are preferably 0 to 2, more preferably 0 or 1 and still more preferably 0. Within the above-described range, it is possible to obtain a thermosensitive recording material that is superior in terms of coloring properties and image portion preservability.

From the viewpoint of coloring properties and image portion preservability, the compound of the (C-2) group is preferably a compound represented by the following structural formulae (IV) to (VI).

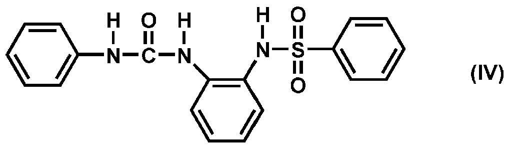

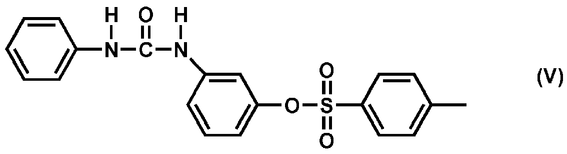

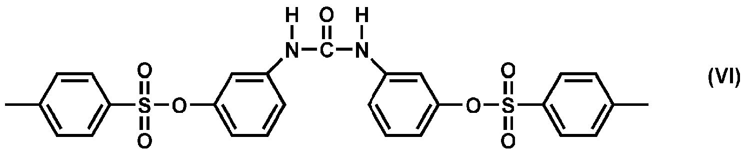

A method for producing the compound of the (C-2) group is not particularly limited. Examples of such a production method include a method described in International Publication No. 2014/080615 and the like. As the compound of the (C-2) group, a commercially available product may be used.

Examples of the commercially available product of the compound of the (C-2) group include NKK-1304 (trade name, structural formula: the structural formula (IV), compound name: N-(2-(3-phenylureido)phenyl)benzenesulfoneamide) manufactured by Nippon Soda Co., Ltd. and TG-MD (trade name, structural formula: the structural formula (V), assumed compound name: N-[4-[[(4-methylphenyl)sulfonyl]oxy]phenyl]-N'-phenylurea) manufactured by Nippon Kayaku Co., Ltd.

The compound of the (C-2) group may be used singly or two or more thereof may be used in combination.

### (Compound of (C-3) group)

4,4'-dihydroxy diphenyl sulfone, 2,4'-dihydroxydiphenylsulfone, bis(3-allyl-4-hydroxyphenyl)sulfone, 4-hydroxy-4'-isoproxydiphenyl sulfone, 4-hydroxy-4'-allyloxydiphenyl sulfone and 4-benzyloxy-4'-hydroxy diphenyl sulfone are represented by the following structural formulae (VII) to (XII), respectively.

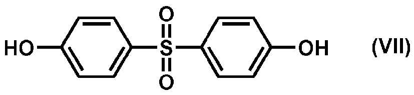

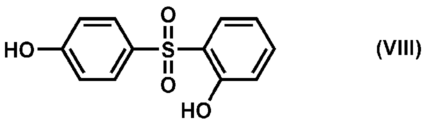

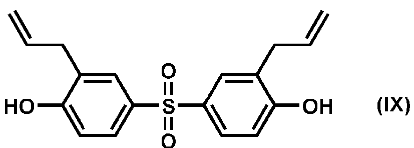

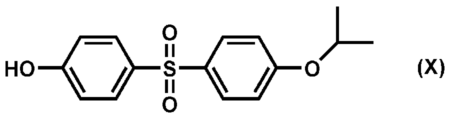

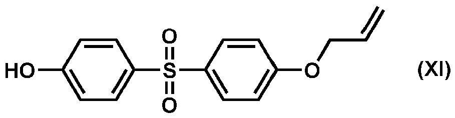

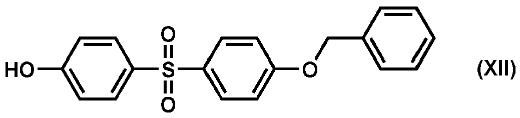

As the compound of the (C-3) group, a commercially available product may be used. Examples of such a commercially available product include BP-S/FF-1 (trade name, structural formula: the structural formula (VII), compound name: 4,4'-dihydroxy diphenyl sulfone), BPS-24C (trade name, structural formula: the structural formula (VIII), compound name: 2,4'-dihydroxy diphenyl sulfone), BPS-33AC (trade name, structural formula: the structural formula (IX), compound name: bis(3-allyl-4-hydroxyphenyl)sulfone), BPS-MAE (trade name, structural formula: the structural formula (XI), compound name: 4-hydroxy-4'-allyloxy diphenyl sulfone), BP-S/MA-3 (trade name, structural formula: the structural formula (XII), compound name: 4-hydroxy-4'-benzyloxy diphenyl sulfone) (all manufactured by Nicca Chemical Co., Ltd.) and D-8 (trade name, structural formula: the structural formula (X), compound name: 4-hydroxy-4'-isopropoxydiphenyl sulfone, manufactured by Nippon Soda Co., Ltd.).

The compound of the (C-3) group may be used singly or two or more thereof may be used in combination.

### (Amount of developer blended in thermosensitive coloring layer)

From the viewpoint of obtaining a thermosensitive recording material having sufficient coloring properties, the total of the contents of the (B) component and the (C) component in the thermosensitive coloring layer is preferably 10 to 500 parts by mass, more preferably 50 to 400 parts by mass, still more preferably 100 to 300 parts by mass and particularly preferably 140 to 210 parts by mass with respect to 100 parts by mass of the coloring substance.

The ratio ((B) component/(C) component) of the content of the (B) component to the content of the (C) component in the thermosensitive coloring layer is preferably 20/80 to 90/10, more preferably 40/60 to 85/15 and still more preferably 60/40 to 80/20 in terms of mass ratio since coloring properties and image portion preservability further improve. When the ratio is within the above-described range, it is possible to obtain a thermosensitive recording material having sufficient coloring properties and excellent image portion preservability.

### (Other developer)

The thermosensitive coloring layer may further contain a developer other than the (B) component and the (C) component to an extent that the effect of the thermosensitive recording material according to the present embodiment is not impaired. As such a developer, well-known conventional developers can be used.

Examples of such developers include developers described in Japanese Translation of PCT Application No. 2020-520833, Japanese Unexamined Patent Publication No. 2020-193153, Japanese Unexamined Patent Publication No. 2006-104219, Japanese Unexamined Patent Publication No. H8-059603, Japanese Unexamined Patent Publication No. H10-029969, Japanese Unexamined Patent Publication No. 2008-303225 and Japanese Unexamined Patent Publication No. 2007-302601.

### (Sensitizer)

The thermosensitive coloring layer may further contain a sensitizer. The sensitizer is not particularly limited, but is preferably a sensitizer having a melting point of 90°C to 140°C. Examples of such a sensitizer include fatty acid amides such as stearic acid amide, ethers such as 1,2-bisphenoxyethane, 1,2-bis(m-tolyloxy)ethane and 2-benzyloxynaphthalene, esters such as di(4-methylbenzyl) oxalate, sulfonamides other than the compound having a sulfonylamide group represented by the general formula (II) such as N-phenylsulfonamide, sulfonic acid esters such as toluenesulfonic acid naphthyl ester, aromatic hydrocarbon compounds such as m-terphenyl and p-benzylbiphenyl, a variety of waxes, condensates of an aromatic carboxylic acid and an amine, higher linear glycols, higher ketones, diphenyl sulfone, p-hydroxybenzoic acid esters, phthalic acid diesters and the like. These sensitizers can be used singly or two or more thereof can be used in combination.

### (Image stabilizer)

The thermosensitive coloring layer may further contain an image stabilizer. The image stabilizer is not particularly limited, and examples thereof include 4-benzyloxy-4'-(2-methylglycidyloxy)diphenyl sulfone, 1,1,3-tris(2-methyl-4-hydroxy-5-cyclohexylphenyl)butane, 1,1,3-tris(2-methyl-4-hydroxy-5-tert-butylphenyl)butane and commercially available TOMIRAC 214 (trade name, manufactured by Mitsubishi Chemical Corporation). These image stabilizers can be used singly or two or more thereof can be used in combination.

### (Loading material)

The thermosensitive coloring layer may further contain a loading material as necessary. Examples of the loading material include inorganic fillers and organic fillers.

### (Additives)

The thermosensitive coloring layer may further contain other additives as necessary. Examples of the other additives include a lubricant, an ultraviolet absorber, a waterproofing agent, a dispersant, an anti-foaming agent, an antioxidant and a fluorescent dye.

### (Method for producing thermosensitive recording material)

A method for producing the thermosensitive recording material according to the present embodiment is not particularly limited, and the thermosensitive recording material can be produced by, for example, dispersing the (A) to (C) components and other components that are added as necessary in a medium such as an aqueous medium together with an appropriate binder to prepare a coating liquid of a thermosensitive coloring layer, applying and drying this coating layer on a support.

A dispersion liquid containing the (A) to (C) components can be prepared by separately preparing each of a dispersion liquid containing the (A) component and a dispersion liquid containing the (B) component and the (C) component and then mixing these dispersion liquids together. It is desirable that the (A) to (C) components are dispersed in a fine particle form in each dispersion liquid. In the preparation of such dispersion liquids, it is possible to use, for example, a sand mill and a ball mill.

The binder is not particularly limited, and examples thereof include cellulose derivatives such as hydroxyethyl cellulose and carboxymethyl cellulose, polyvinyl alcohols such as polyvinyl alcohol and modified polyvinyl alcohol, gelatin, casein, starch, polyacrylic acid, polyacrylic acid esters, polyvinyl acetate, polyacrylamide, styrene-maleic acid copolymers, styrene-butadiene copolymers, polyamide resins, petroleum resins and terpene resins. These binders can be used singly or two or more thereof can be used in combination.

### (Configuration of thermosensitive recording material)

In the thermosensitive recording material according to the present embodiment, for example, an undercoat layer containing at least one of an inorganic filler and an organic filler can be provided as necessary. Furthermore, an overcoat layer that is formed of a water-soluble resin such as a cellulose derivative or a polyvinyl alcohol, a water-soluble emulsion resin such as a styrene-butadiene copolymer, a water-insoluble resin or a material obtained by adding a loading material, an isocyanate, a monomer or oligomer of an unsaturated compound or the like or a crosslinking agent to the above-described resin can be provided on the thermosensitive coloring layer as necessary.

The thermosensitive recording material according to the present embodiment can be made into a thermosensitive multicolor recording material in which multiple coloring layers containing coloring substances with different tones are formed.

### [Examples]

Hereinafter, the present disclosure will be more specifically described based on examples, but the present disclosure is not limited to the following examples.

### [Purification of kraft lignin]

### (Purification Example 1)

Kraft lignin was purified by a method in which the kraft lignin and water were heated and the azeotropic distillation of dimethyl disulfide with water was performed. Specifically, first, 160 g of kraft lignin (manufactured by MeadWestvaco Corporation, INDULIN AT) and 640 g of distilled water were injected into a 1 L separable flask to obtain a treatment liquid. In the separable flask, a cooling device for a distillate and a nitrogen introduction tube capable of introducing nitrogen into a mixture were installed. The separable flask was installed on an oil bath. The treatment liquid was heated with the oil bath to increase the temperature and heated until two hours had passed from the beginning of the distilling of water. The temperature of the oil bath was set to 120°C. During the heating, the treatment liquid was stirred and mixed while nitrogen was introduced into the treatment liquid at a flow rate of 20 mL/minute. After two hours elapsed, the treatment liquid was air-cooled to 50°C. Next, the air-cooled treatment liquid was suction-filtered using a Buchner funnel to obtain a filtrate. The obtained filtrate was taken out and dried, thereby obtaining purified kraft lignin. The filtrate was dried using a PERFECT OVEN PHH-200 (trade name, manufactured by ESPEC Corp.), the temperature was set to 60°C, and the time was set to 18 hours.

### (Purification Examples 2 and 3)

Purified kraft lignin was obtained in the same manner as in Example 1 except that the heating time of the mixture from the beginning of the distillation of the mixture, the nitrogen gas flow rate and the temperature of the oil bath were set to values shown in Table 1.

### [Preparation of unpurified kraft lignin]

Kraft lignin (manufactured by MeadWestvaco Corporation, INDULIN AT) was prepared as unpurified kraft lignin.

### [Method for measuring content of dimethyl disulfide]

### (Creation of calibration curve)

As a standard substance, dimethyl disulfide (purity: 99.0%, manufactured by Fujifilm Wako Pure Chemical Corporation) was precisely weighed using an electronic balance (SARTORIUS A200S, manufactured by Sartorius AG) and sequentially diluted with ethanol (purity: 99.5%, manufactured by Fujifilm Wako Pure Chemical Corporation), thereby fabricating standard solutions having concentrations of 0.200 mg/g, 0.100 mg/g, 0.020 mg/g and 0.004 mg/g. 0.01 g of each of the obtained standard solutions was weighed in a 22 mL vial, and headspace GC-MS was performed thereon. A calibration curve was created from the integral value of peaks at holding times of 11.5 to 11.6 minutes corresponding to dimethyl disulfide, which were obtained by measurement.

### (Measurement of sample)

0.4 g of the kraft lignin obtained in each of the purification examples or unpurified kraft lignin was precisely weighed and injected into a 22 mL vial. In addition, 0.01 g of the ethanol that was used at the time of fabricating the standard solutions was added to the vial, the vial was closed, and headspace GC-MS was performed in the same manner as for the measurement of the standard solutions. The content of dimethyl disulfide was calculated using the integral value of the peaks at the holding times of 11.5 to 11.6 minutes corresponding to dimethyl disulfide, which were obtained by measurement, and the calibration curve. The results are shown in Table 1.

### [Details of measurement conditions in headspace GC-MS]

### (Measurement conditions)

Device: Agilent 7697A-7890A/5975C (headspace GC-MS)
Column: Trade name VF-1301ms (6% cyanopropylphenyl-94% dimethylpolysiloxane)
Headspace vial capacity: 22 mL
Headspace oven equilibration temperature: 100°C
Roof temperature: 120°C
Transfer line temperature: 180°C
Headspace oven equilibration time: For 20 minutes
Cycle time: For 32 minutes
GC inlet temperature: 250°C
Split ratio: 30:1
GC initial temperature: 40°C (held for three minutes)
GC temperature rise rate: 10°C per minute
GC final temperature: 220°C (held for six minutes)
MS ion source temperature: 230°C
MS quadrupole temperature: 150°C
Carrier gas: Helium
Carrier gas flow rate: 1 mL/min
Imported MS range: 30 to 350

**[Table 1]**

| | Purification Example 1 | Purification Example 2 | Purification Example 3 | Unpurified |
|---|---|---|---|---|
| Presence or absence of purification step | Present | Present | Present | Absent |
| Solvent used | Water | Water | Water | - |
| Treatment liquid temperature (°C) | 100 | 100 | 100 | - |
| Oil bath temperature (°C) | 120 | 110 | 110 | - |
| Nitrogen gas flow rate (mL/minute) | 20 | 20 | 0 | - |
| Treatment time (hours) | 2 | 1 | 1 | - |
| Content of dimethyl disulfide (ppm) | 0.9 | 2.2 | 2.8 | 10.3 |

### [Fabrication of thermosensitive recording material]

### (1) Coating liquid for forming underlayer

| | |
|---|---|
| Calcined kaolin | 20.0 parts by mass |
| 10 mass% polyvinyl alcohol aqueous solution | 30.0 parts by mass |
| Dispersant (acetylene glycol-based nonionic surfactant) | 0.3 parts by mass |
| Binder (polyvinyl acetate emulsion, solid content: 40 mass%) | 18.0 parts by mass |
| Distilled water | 31.7 parts by mass |
| | A total of 100.0 parts by mass |

A mixture composed of the above-described composition was mixed and stirred using a homodisper, thereby preparing a coating liquid for forming an underlayer.

### (2) Coating liquid for forming thermosensitive coloring layer

An A liquid (first developer dispersion liquid), a B liquid (second developer dispersion liquid) and a C liquid (coloring substance dispersion liquid) having compositions (parts by mass) shown below were each prepared. The A liquid to the C liquid were prepared by performing wet-type dispersion using a sand mill until the average particle diameter reached approximately 0.5 µm.

### A liquid (first developer dispersion liquid)

| | |
|---|---|
| Kraft lignin shown in Table 2 | 20 parts by mass |
| 10 mass% polyvinyl alcohol aqueous solution | 20 parts by mass |
| Distilled water | 60 parts by mass |
| A total of | 100 parts by mass |

### B liquid (second developer dispersion liquid)

| | |
|---|---|
| Compound shown in Table 3 | 20 parts by mass |
| 10 mass% polyvinyl alcohol aqueous solution | 20 parts by mass |
| Distilled water | 60 parts by mass |
| A total of | 100 parts by mass |

### C liquid (coloring substance dispersion liquid)

| | |
|---|---|
| 3-Dibutylamion-6-methyl-7-anilinofluoran | 20 parts by mass |
| 10 mass% polyvinyl alcohol aqueous solution | 20 parts by mass |
| Distilled water | 60 parts by mass |
| A total of | 100 parts by mass |

**[Table 2]**

| Liquid name | Kraft lignin added |
|---|---|
| A-1 liquid | (Highly purified) kraft lignin of Purification Example 1 |
| A-2 liquid | (Intermediately purified) kraft lignin of Purification Example 2 |
| A-3 liquid | (Poorly purified) kraft lignin of Purification Example 3 |
| A-4 liquid | Unpurified kraft lignin |

**[Table 3]**

| Liquid name | Compound added | | | |
|---|---|---|---|---|
| | Compound name | Structural formula | Trade name | Manufacturer |
| B-1 liquid | N-[p-toluenesulfonyl]-N'-[3-p-toluenesulfonyl oxyphenyllurea | (III) | PF-201 | Solenis |
| B-2 liquid | N-(2-(3-phenylureido)phenyl)benzenesulfoneamide | (IV) | NKK-1304 | Nippon Soda Co., Ltd. |
| B-3 liquid | N-[4-[[(4-methylphenyl)sulfonylloxylphenyl]-N'-phenylurea | (V) | TG-MD | Nippon Kayaku Co., Ltd. |
| B-4 liquid | N,N'-di-[3-(p-toluenesulfonyloxy)phenyl]urea | (VI) | - | - |
| B-5 liquid | 4,4'-Dihydroxy diphenyl sulfone | (VII) | BP-S/FF-1 | Nicca Chemical Co., Ltd. |
| B-6 liquid | 2,4'-Dihydroxy diphenyl sulfone | (VIII) | BPS-24C | Nicca Chemical Co., Ltd. |
| B-7 liquid | 3,3'-Allyl-4,4'-dihydroxy diphenyl sulfone | (IX) | BPS-33AC | Nicca Chemical Co., Ltd. |
| B-8 liquid | 4-Hydroxy-4'-isopropoxydiphenylsulfone | (X) | D-8 | Nippon Soda Co., Ltd. |
| B-9 liquid | 4-Allyloxy-4'-hydroxy diphenyl sulfone | (XI) | BPS-MAE | Nicca Chemical Co., Ltd. |
| B-10 liquid | 4-Benzyloxy-4'-hydroxy diphenyl sulfone | (XII) | BP-S/MA-3 | Nicca Chemical Co., Ltd. |

A compound represented by a structural formula (VI) blended into a B-4 liquid was synthesized by a method described in International Publication No. 2019/044462.

### (Example 1)

A mixture composed of the following composition (parts by mass) was mixed and stirred using the homodisper, thereby preparing a coating liquid for forming a thermosensitive coloring layer.

| | |
|---|---|
| A liquid (A-1 liquid) | 22.5 parts by mass |
| B liquid (B-1 liquid) | 7.5 parts by mass |
| C liquid (coloring substance dispersion liquid) | |
| | 15.0 parts by mass |
| Calcined kaolin | 9.0 parts by mass |
| 2 mass% polyvinyl alcohol aqueous solution | Residue |
| | A total of 100.0 parts by mass |

The coating liquid for forming an underlayer was applied onto high-quality paper having a basis weight of 65 g/m² with a bar coater so that the wet application amount reached approximately 23 g/m² and air-dried, and a calendar treatment was performed thereon, thereby fabricating a support provided with an underlayer. At that time, the coating liquid for forming a thermosensitive coloring layer was applied onto a surface of the support on which the underlayer was provided so that the wet application amount reached approximately 22 g/m² and air-dried, and a calendar treatment was performed thereon to form a thermosensitive coloring layer, thereby fabricating a thermosensitive recording material.

### (Examples 2 to 22 and Comparative Examples 1 to 22)

Thermosensitive recording materials were each fabricated in the same manner as in Example 1 except that the kinds and amounts blended (parts by mass) of the A liquid and the B liquid that were blended into the coating liquid for forming a thermosensitive coloring layer were changed as shown in Tables 4 to 10.

### [Evaluation of thermosensitive recording material]

The thermosensitive recording materials fabricated in the examples and the comparative examples were evaluated by the following methods.

### <Determination of odor at the time of forming image portion>

The thermosensitive recording material was colored using a thermosensitive paper printing evaluation tester (trade name: "TH-M2/PS", manufactured by Okura Engineering Co., Ltd.) with a print voltage of 20 V and a pulse width of 3 ms to form an image portion. For the image portion of the thermosensitive recording material immediately after being taken out from the device, sensory evaluation was performed on an odor according to the following odor determination criteria by bringing the thermosensitive recording material close to a distance from the nose of approximately 10 cm. The average value of the numerical values of determination results from six evaluators was regarded as the comprehensive determination result. The results are shown in Tables 4 to 10.

### (Determination criteria of odor)

5: An odor is not or rarely sensed.
4: An odor is slightly sensed, but is not sensed as an unpleasant odor.
3: An unpleasant odor is slightly sensed.
2: An unpleasant odor is sensed.
1: A quite strong unpleasant odor is sensed.

### (Criteria of comprehensive determination results)

A: The average value of the numerical values of the respective determination results of the six evaluators is 5.0.
B: The average value of the numerical values of the respective determination results of the six evaluators is 4.0 or higher and lower than 5.0.
C: The average value of the numerical values of the respective determination results of the six evaluators is 3.0 or higher and lower than 4.0.
D: The average value of the numerical values of the respective determination results of the six evaluators is 2.0 or higher and lower than 3.0.
E: The average value of the numerical values of the respective determination results of the six evaluators is 1.0 or higher and lower than 2.0.

### <Coloring properties>

Coloring was performed using the thermosensitive paper printing evaluation tester (trade name: "TH-M2/PS", manufactured by Okura Engineering Co., Ltd.) with a pulse width of 3 ms and a printing energy increased every 0.07 mJ/dot to form an image portion. The color density of the formed image portion was measured with a Macbeth densitometer (trade name: "RD-918", manufactured by Macbeth). It is indicated that, as the numerical value becomes smaller, the image becomes lighter, and, as the numerical value becomes larger, the image becomes darker. The color density of the image portion in the case of coloring at 0.42 mj/dot was determined by the following determination criteria. The results are shown in Tables 4 to 10.

### (Determination criteria)

A: 1.20 or higher
B: 1.00 or higher and lower than 1.20
C: 0.80 or higher and lower than 1.00
D: 0.60 or higher and lower than 0.80
E: Lower than 0.60

### <Alcohol resistance>

The thermosensitive recording material was colored using the thermosensitive paper printing evaluation tester (trade name: "TH-M2/PS", manufactured by Okura Engineering Co., Ltd.) with a print voltage of 20 V and a pulse width of 3 ms to form an image portion. The color density of the formed image portion was measured with a Macbeth densitometer (trade name "RD-918", manufactured by Macbeth). Next, the thermosensitive recording material was immersed in a liquid mixture of 25 parts by volume of ethanol (room temperature, 20°C) and 75 parts by volume of distilled water and left to stand for three hours. After that, the thermosensitive recording material was lifted from the liquid mixture, the surface of the thermosensitive recording material was pressed with filter paper and naturally dried. The color density of the image portion of the dried thermosensitive recording material was measured with the Macbeth densitometer. The residual rate (%) was calculated based on the following formula (1), and the residual rate was determined according to the following determination criteria. The results are shown in Tables 4 to 10. Residual rate (%) = [color density after immersion in liquid mixture/color density before immersion in liquid mixture] × 100)

### (Determination criteria)

A: 90% or higher
B: 70% or higher and lower than 90%
C: 50% or higher and lower than 70%
D: 30% or higher and lower than 50%
E: Lower than 30%

### <Water resistance>

The thermosensitive recording material was colored using the thermosensitive paper printing evaluation tester (trade name: "TH-M2/PS", manufactured by Okura Engineering Co., Ltd.) with a print voltage of 20 V and a pulse width of 3 ms to form an image portion. The color density of the formed image portion was measured with a Macbeth densitometer (trade name "RD-918", manufactured by Macbeth). Next, the thermosensitive recording material was immersed in distilled water (room temperature, 20°C) and left to stand for 24 hours. After that, the thermosensitive recording material was lifted from the distilled water, the surface of the thermosensitive recording material was pressed with filter paper and naturally dried. The color density of the image portion of the dried thermosensitive recording material was measured with the Macbeth densitometer. The residual rate (%) was calculated based on the following formula (2), and the residual rate was determined according to the following determination criteria. The results are shown in Tables 4 to 10. Residual rate (%) = [color density after immersion in distilled water/color density before immersion in distilled water] × 100)

### (Determination criteria)

A: 90% or higher
B: 85% or higher and lower than 90%
C: 80% or higher and lower than 85%
D: 75% or higher and lower than 80%
E: Lower than 75%

### <Wet and heat resistance of non-image portion ground color>

A fabricated thermosensitive recording body was placed still under a 40°C and 90% RH environment condition for 24 hours. The yellow value density of a non-image portion (blank portion) of the thermosensitive recording body was measured with a Macbeth densitometer (trade name "RD-914", amber filter used). The yellow value density was determined according to the following determination criteria. The results are shown in Tables 4 to 10.

### (Determination criteria)

A: Lower than 0.1
B: 0.1 or higher and lower than 0.4
C: 0.4 or higher and lower than 0.5
D: 0.5 or higher and lower than 0.6
E: 0.6 or higher

### <Lightfastness of non-image portion ground color>

An irradiation treatment was performed on the fabricated thermosensitive recording body for six hours using a xenon fade meter (manufactured by Atlas Material Testing Technology LLC, trade name "Ci3000F") at an irradiation intensity of 67 W/m². The yellow value density of a non-image portion (blank portion) of the thermosensitive recording material after the irradiation treatment was measured with the Macbeth densitometer (trade name "RD-914", amber filter used). The yellow value density was determined according to the following determination criteria. The results are shown in Tables 4 to 10.

### (Determination criteria)

A: Lower than 0.2
B: 0.2 or higher and lower than 0.4
C: 0.4 or higher and lower than 0.5
D: 0.5 or higher and lower than 0.6
E: 0.6 or higher

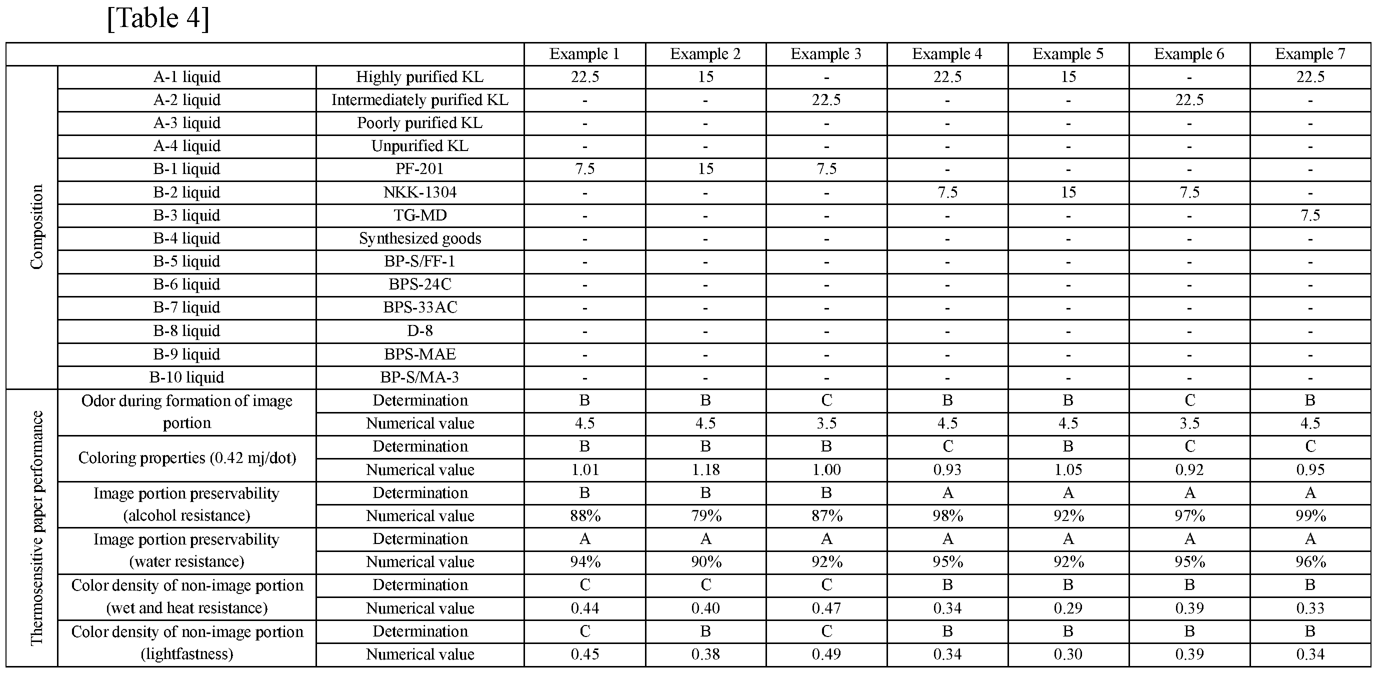

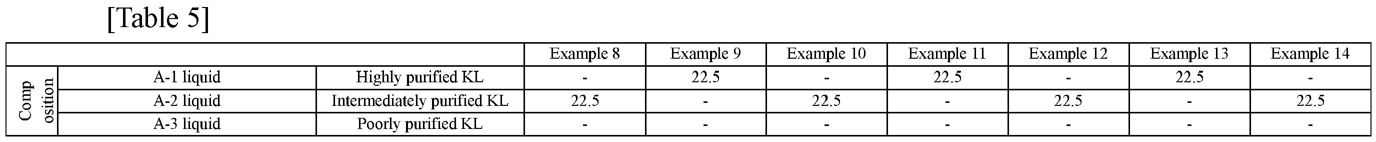

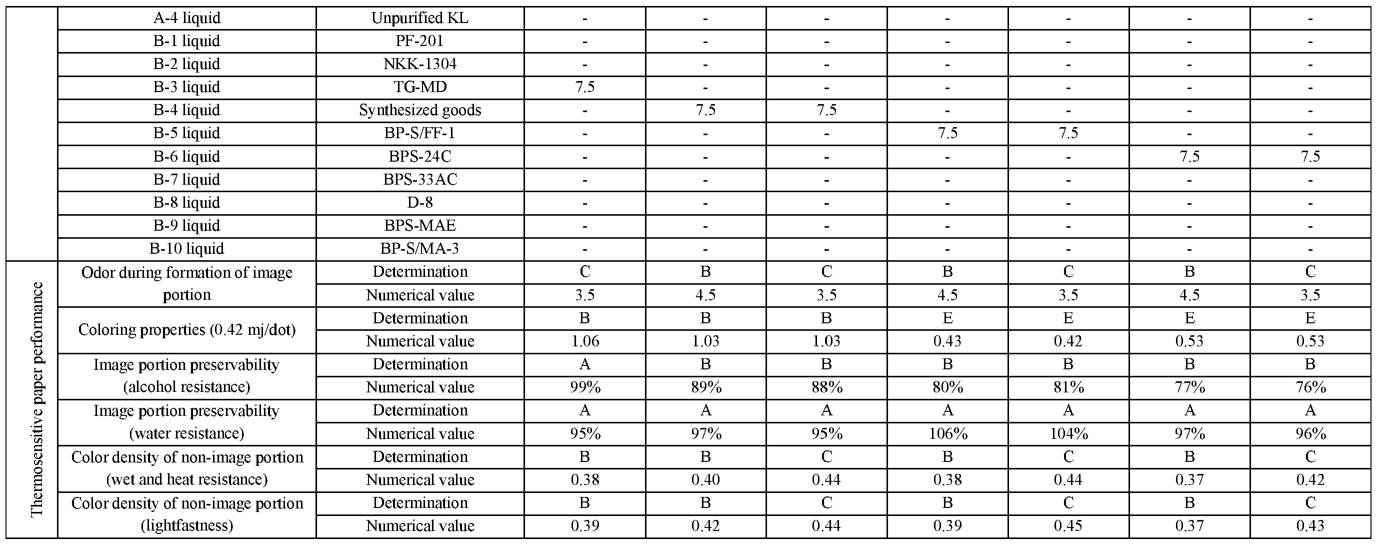

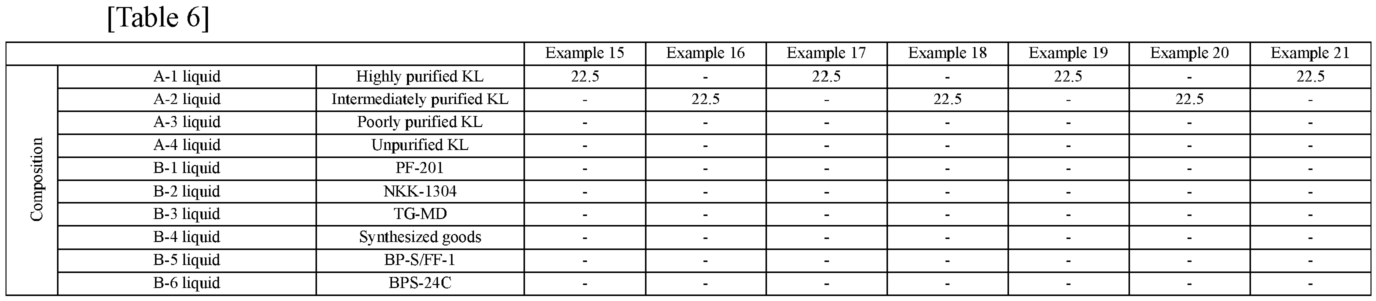

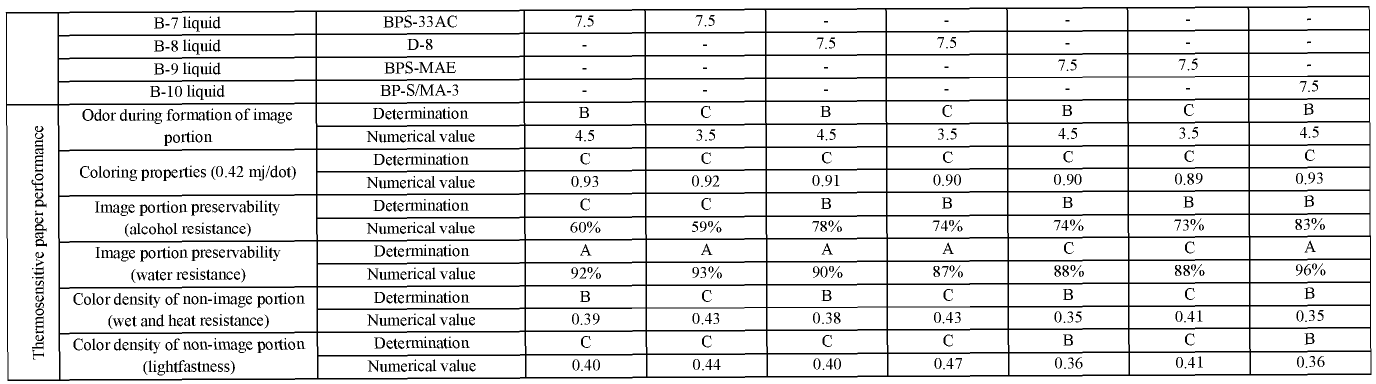

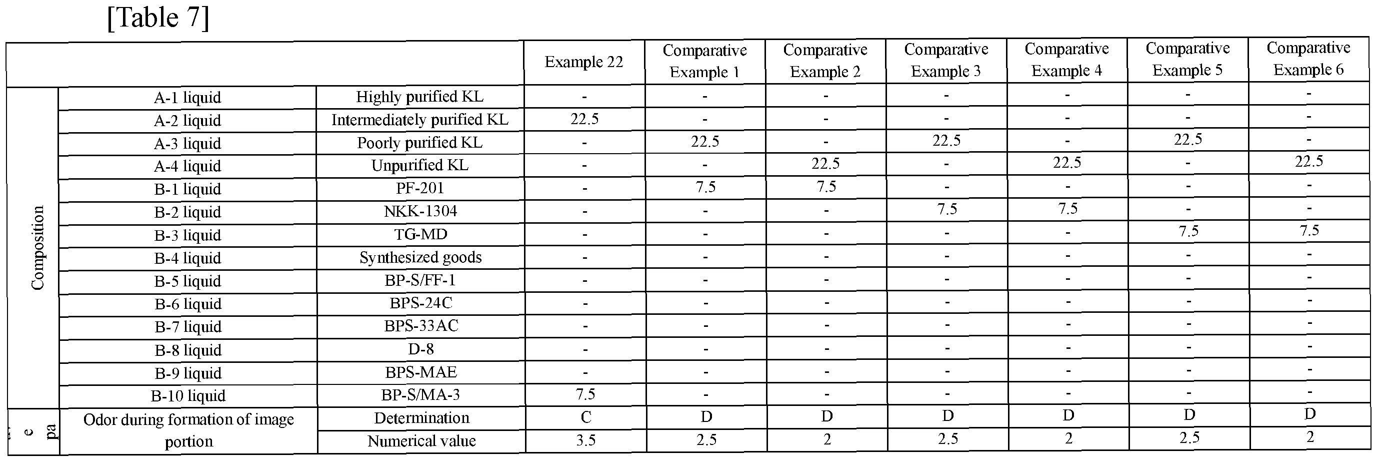

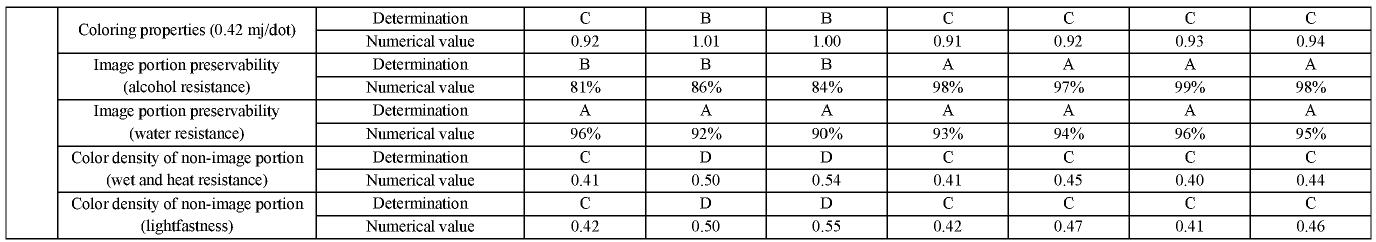

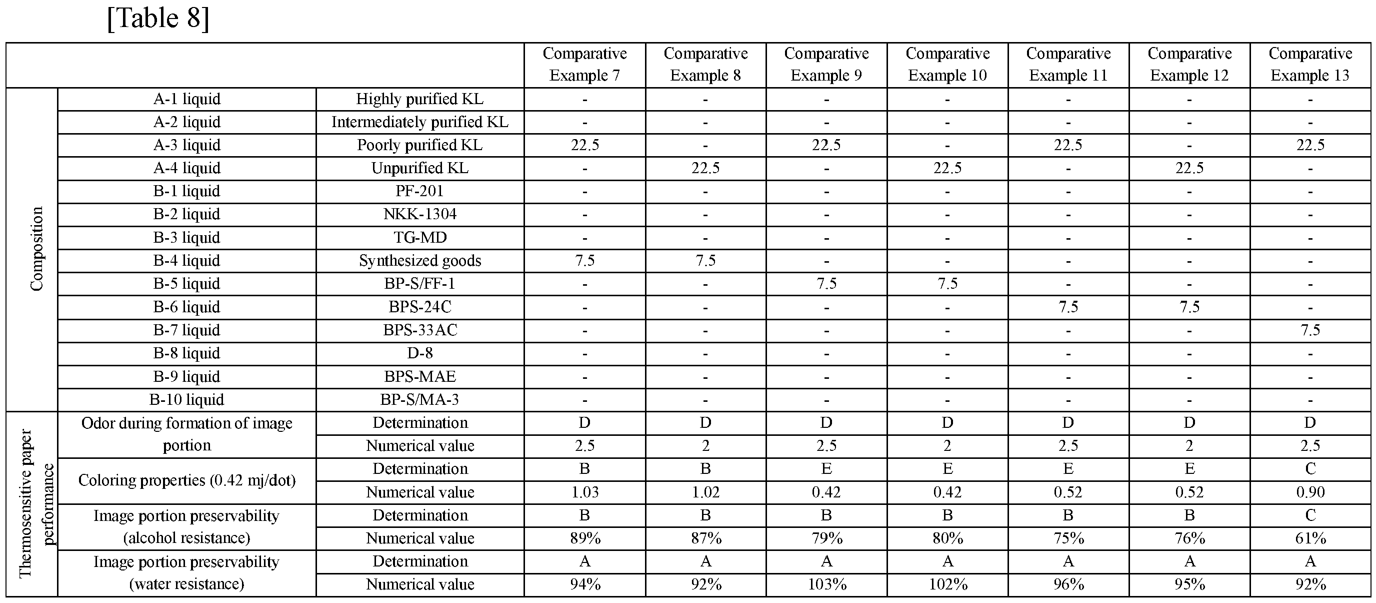

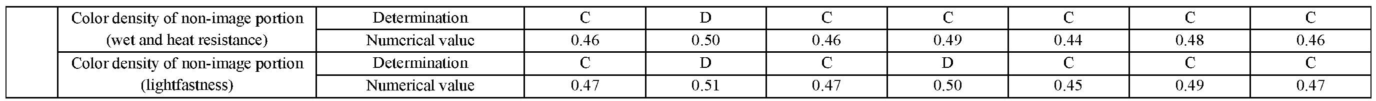

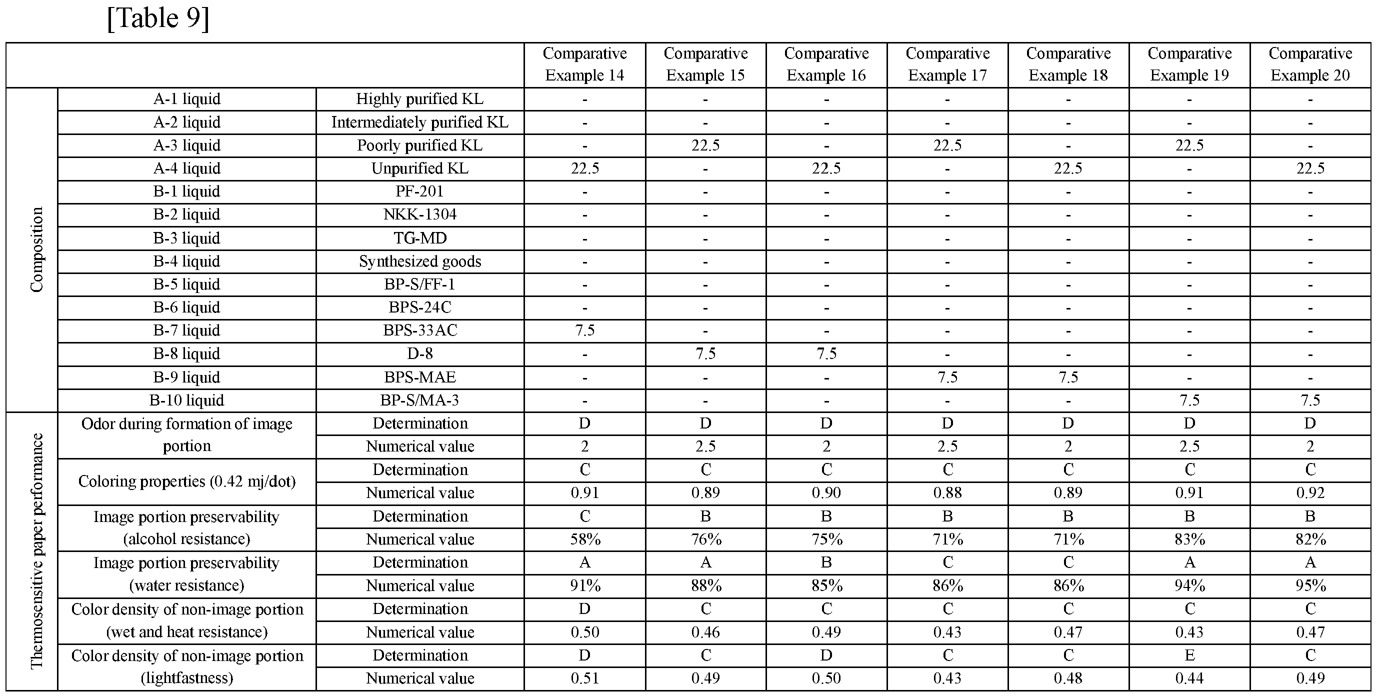

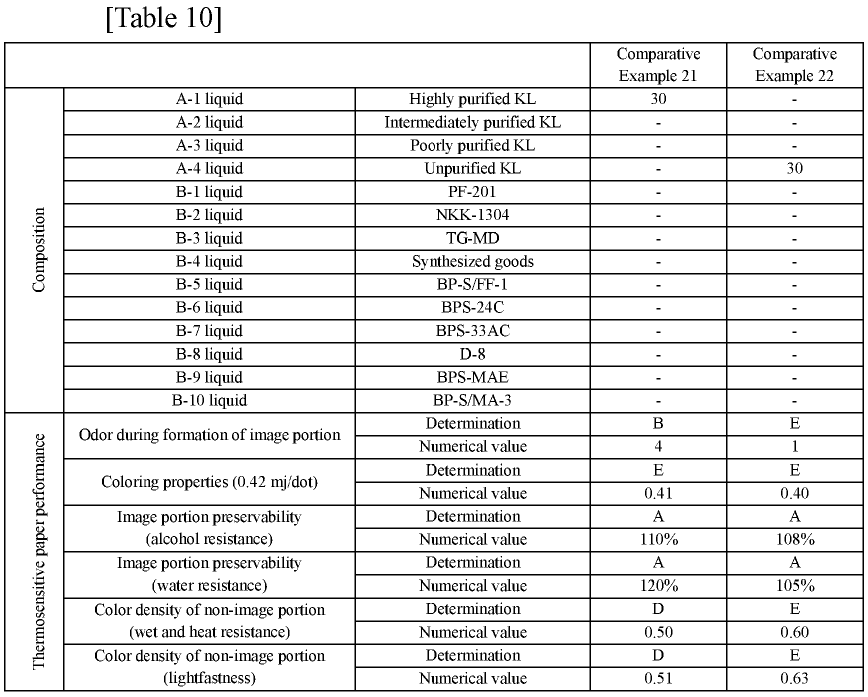

## Claims

1. A thermosensitive recording material comprising:
a support; and
a thermosensitive coloring layer provided on the support,
wherein the thermosensitive coloring layer contains (A) a coloring substance, (B) a kraft lignin in which a content of dimethyl disulfide is 2.5 ppm or less, and (C) at least one developer of a compound of the following (C-1) group, a compound of the following (C-2) group and a compound of the following (C-3) group,
(C-1) group: a compound represented by the following general formula (I) having a sulfonylurea group
(C-2) group: a compound represented by the following general formula (II) having a sulfonylamide group, and
(C-3) group: 4,4'-dihydroxy diphenyl sulfone, 2,4'-dihydroxydiphenylsulfone, bis(3-allyl-4-hydroxyphenyl)sulfone, 4-hydroxy-4'-isoproxydiphenyl sulfone, 4-hydroxy-4'-allyloxydiphenyl sulfone and 4-benzyloxy-4'-hydroxy diphenyl sulfone 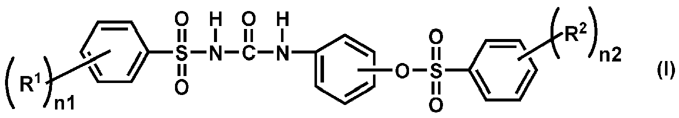
[where R¹ and R² represent a halogen atom, an alkyl group having 1 to 4 carbon atoms, an alkenyl group having 2 to 4 carbon atoms or an alkoxy group having 1 to 4 carbon atoms, n1 and n2 represent an integer of 0 to 3, and, in a case where a plurality of R¹'s and a plurality of R²'s are present, R¹'s and R²'s may be the same as or different from each other] 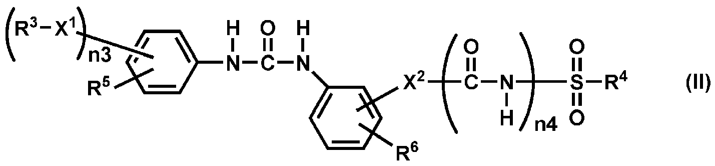
[where X¹ and X² each independently represent -O- or -NH-, R³ represents a hydrogen atom or -SO₂-R⁴, R⁴ represents a substituted or unsubstituted alkyl group, aralkyl group or aryl group, R⁵ and R⁶ each independently represent a hydrogen atom or an alkyl group, n3 represents 0 or 1, n4 represents an integer of 0 to 2, and, in a case where a plurality of R³'s is present, R³'s may be the same as or different from each other].

2. The thermosensitive recording material according to Claim 1,
wherein, in the thermosensitive coloring layer, a ratio ((B) component/(C) component) of a content of the (B) component to a content of the (C) component is 20/80 to 90/10 in terms of mass ratio.

3. The thermosensitive recording material according to Claim 1 or 2,
wherein a compound represented by the following structural formula (III) is contained as the developer,

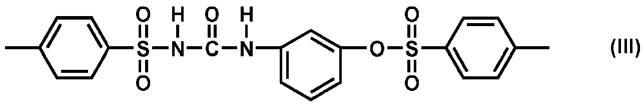

4. The thermosensitive recording material according to Claim 1 or 2,
wherein one or more of compounds represented by the following structural formulae (IV) to (VI) are contained as the developer,
